**Europäisches Patentamt**

**European Patent Office**

**Office européen des brevets**

(19)

(11) Veröffentlichungsnummer: **0 237 840**
**B1**

(12) # EUROPÄISCHE PATENTSCHRIFT

(45) Veröffentlichungstag der Patentschrift:
**12.12.90**

(51) Int. Cl.⁵: **F16H 1/445,** B60K 17/20

(21) Anmeldenummer: **87102625.8**

(22) Anmeldetag: **24.02.87**

(54) Betätigungseinrichtung für eine kraftschlüssige Sperrkupplung eines sperrbaren Differentialgetriebes für Kraftfahrzeuge.

(30) Priorität: **12.03.86 DE 3608118**

(43) Veröffentlichungstag der Anmeldung:
**23.09.87 Patentblatt 87/39**

(45) Bekanntmachung des Hinweises auf die Patenterteilung:
**12.12.90 Patentblatt 90/50**

(84) Benannte Vertragsstaaten:
**AT BE CH DE FR GB IT LI NL SE**

(56) Entgegenhaltungen:
**DE-A- 3 212 495**
**US-A- 1 336 532**
**US-A- 2 812 046**
**US-A- 3 187 862**

(73) Patentinhaber: **Xaver Fendt & Co.,**
**Johann-Georg-Fendt-Strasse 4,**
**D-8952 Marktoberdorf(DE)**

(72) Erfinder: **Honzek, Robert, Kirchberg 4,**
**D-8951 Oberthingau(DE)**
Erfinder: **Marschall, Hans, Haydnstrasse 9,**
**D-8952 Marktoberdorf(DE)**

## Beschreibung

Die Erfindung betrifft eine Betätigungseinrichtung der im Oberbegriff des Hauptanspruches beschriebenen Gattung.

Eine derartige Betätigungseinrichtung geht aus der DE-OS 32 12 495 hervor. Als Kraftverstärkungselement ist hier eine Tellerfeder vorgesehen, die in Art eines Trägers auf zwei Stützen auf ihrer einen Seite mit ihrem äußeren Randbereich an einer radialen Anlagefläche des Differentialgehäuses anliegt und mit ihrem inneren Randbereich vom verschiebbaren Betätigungselement beaufschlagbar ist. Auf ihrer anderen Seite stützt sich die Tellerfeder innerhalb der ringförmigen Anlagefläche des Differentialgetriebes in einem ebenfalls ringförmigen Bereich am Druckstück ab, wobei der wirksame Abstand der Anlagefläche des Differentialgehäuses und des Druckstückes wesentlich geringer ist als der wirksame Abstand der Anlagefläche des Differentialgehäuses von der Angriffstelle des Betätigungselementes. Auf diese Weise kann die über das Betätigungselement auf die Tellerfeder aufgebrachte Axialkraft stark übersetzt werden und es stehen somit am Druckstück für das Zusammenpressen der als Lamellenkupplung ausgebildeten Sperrkupplung hohe Axialkräfte zur Verfügung. Zur Aufrechterhaltung der einmal eingerückten Sperrkupplung ist es hier allerdings notwendig, das Betätigungselement ständig zu beaufschlagen, da die am Druckstück zur Verfügung stehende Axialkraft direkt abhängig ist von der Axialkraft des Betätigungselementes. Das Betätigen und Halten der eingerückten Differentialsperre ist dann problemlos, wenn das Betätigungselement auf hydraulischem oder pneumatischem Wege beaufschlagt ist. Aus verschiedenen Gründen kann es jedoch vorteilhaft oder notwendig sein, das Betätigungselement elektromagnetisch zu steuern. In solchen Fällen erweist es sich als äußerst nachteilig, bei bereits eingerückter Differentialsperre auch weiterhin am Betätigungselement die volle axiale Kraft zur Verfügung stellen zu müssen, da Elektromagnete mit einer dementsprechenden Dauerbelastung nicht nur unverhältnismäßig voluminös bauen und so Schwierigkeiten bei der Unterbringung hervorrufen, sondern auch verhältnismäßig teuer sind.

Ausgehend von dem aufgezeigten Stand der Technik liegt der Erfindung die Aufgabe zugrunde, eine kompakt bauende Betätigungseinrichtung der eingangs näher beschriebenen Art zu schaffen, die mit Hilfe eines relativ schwachen, kleinbauenden Elektromagneten ein Einrücken und Halten der Sperrkupplung erlaubt.

Zur Lösung dieser Aufgabe wird vorgeschlagen, daß dem nach dem Hebelprinzip arbeitenden, ersten Kraftverstärkungselement in Kraftflußrichtung ein zweites, nach dem Kniehebelprinzip arbeitendes Kraftverstärkungselement vorgeordnet ist, wobei das erste Kraftverstärkungselement von mehreren im wesentlichen in radialen Ebenen liegenden Kipphebeln gebildet ist, die miteinander zu einem Kipphebelring verbunden sind, der in seinem inneren Randbereich kupplungsabtriebsseitig abgestützt ist, in seinem mittleren Bereich zur Kraftübertragung an der Druckplatte anliegt sowie mit seinem äußeren Randbereich in axialem Abstand von seinem inneren Randbereich und radialem Abstand von dem längsverschiebbaren Betätigungselement (Hülse, Ring) mit dem zweiten Kraftverstärkungselewent (Spreizring) zusammenwirkt.

In der US-A- 3 187 862 ist zwar bereits ein Kupplungsmechanismus beschrieben, der Gebrauch macht von zwei in Kraftflußrichtung hintereinandergeschalteten Kraftverstärkungselementen, von denen das eine in Hebelbauweise und das andere als Kniehebel ausgeführt ist. Aus dem Umstand, daß das Kraftverstärkungselement in Hebelbauweise vor dem Kniehebel-Kraftverstärkungselement angeordnet ist, resultiert aber bei einer großen gewünschten Kraftverstärkung auch des Kraftverstärkungselements in Hebelbauweise ein verhältnismäßig großer Durchmesser des Kupplungsmechanismus, weil dieser direkt abhängt von der die Größe der Kraftverstärkung mitbestimmenden Länge des mit dem Betätigungselement zusammenwirkenden Hebelarmes und dieser wenig platzsparend in radialer Richtung verläuft. Der bekannte Kupplungsmechanismus eignet sich daher nur bedingt zum Einsatz in Sperrkupplungen von Differentialgetrieben, wenn dort ein nur kleines Einbauvolumen zur Verfügung steht. Ferner wird auch im Hinblick auf die aufwendige Lagerung der Kraftverstärkungselemente eine Übernahme des bekannten Kupplungsmechanismus nicht angeregt.

Durch die erfindungsgemäße Anordnung der Kraftverstärkungselemente ergibt sich demgegenüber der Vorteil einer im Durchmesser kleinen Bauweise, wobei sich durch die schräge Anordnung der Kipphebel eine deutliche Kraftverstärkung bei nur geringer Durchmesserzunahme erzielen läßt. Einen erheblichen Vorteil verspricht auch die Maßnahme, die Kipphebel zu einem Kipphebelring zu verbinden, wodurch keine gesonderten Befestigungsmittel für die Kraftverstärkungselemente erforderlich sind, da sich diese an sowieso vorhandenen Bauteilen und gegeneinander abstützen.

Eine baulich besonders einfache Ausführungsform ist dadurch gekennzeichnet, daß die Kipphebel in ihrem inneren Endbereich zu einem einstückigen Kipphebelring miteinander verbunden sind, der zudem mit diesem Bereich auf der Nabe der abtriebsseitigen Hälfte der Sperrkupplung geführt ist.

Das Merkmal, wonach der Kipphebelring auf der der Druckplatte abgewandten Seite an einem federbelasteten Anschlag abgestützt ist, ermöglicht eine einwandfreie Funktion der Sperrkupplung unabhängig vom Verschleiß oder von der Änderung von Eigenschaften bestimmter Bauteile. Hierbei ist es sinnvoll, als Anschlag einen gegen die Kraft einer Feder verschiebbaren Ring vorzusehen, der sich seinerseits an einem Absatz der Nabe des Achswellenkegelrades abstützt.

Um eine hohe Kraftverstärkung mit technisch einfachsten Mitteln zu erzielen, wird ferner vorgeschlagen, daß als Kraftverstärkungselement ein Spreizring angeordnet ist. In besonders einfacher Weise ist dieser mit seinem inneren Randbereich sowohl radial als auch axial spielfrei an dem Betätigungselement (Hülse) und mit seinem äußeren Randbereich sowohl radial als auch axial an entsprechenden Innenflächen der freien äußeren Endbereiche der Kipphebel abgestützt.

Um die zusätzliche Belastung der Lager des Differentialgetriebes anläßlich der Betätigung der Sperrkupplung möglichst gering zu halten, ist es außerdem zweckmäßig, die Betätigungseinrichtung im Innern des Differentialgetriebegehäuses unterzubringen.

Die Erfindung wird im folgenden anhand eines Ausführungsbeispieles näher beschrieben. Es zeigt:

Fig. 1 die Schnittansicht eines sperrbaren Differentialgetriebes mit der erfindungsgemäßen Betätigungseinrichtung und

Fig. 2 ein Diagramm, in welchem die Schließkraft der Sperrkupplung über den Betätigungsweg des Betätigungselementes aufgetragen ist.

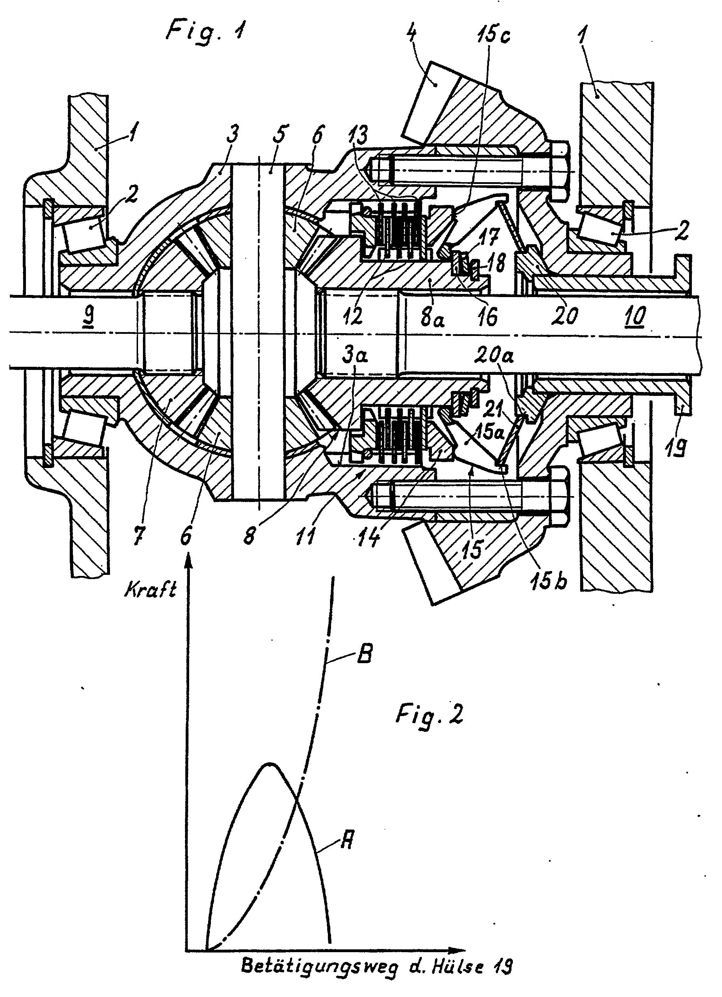

Das in Fig. 1 gezeigte Differentialgetriebe kann sowohl in der Hinterachse als auch in der Vorderachse eines Fahrzeuges untergebracht sein. Zwei mit dem Achskörper der betreffenden Achse verbundene Wände 1 weisen miteinander fluchtende Bohrungen auf, in welchen Kegelrollenlager 2 zur Lagerung des Differentialgetriebegehäuses 3 angeordnet sind. In dem über das Zahnrad 4 antreibbaren Gehäuses 3 ist in herkömmlicher Weise das Differentialgetriebe bestehend aus den beiden auf der fest im Gehäuse 3 sitzenden Achse 5 gelagerten Ausgleichsrädern 6 sowie den damit kämmenden Achswellenkegelrädern 7,8. Die Achswellenkegelräder 7,8 sind jeweils auf eine zu den Antriebsrädern der betreffenden Achse führende Achswelle 9,10 aufgesetzt und über eine Keilverzahnung drehbar mit dieser verbunden.

Die Differentialgetriebesperre besteht aus einer Lamellen-Sperrkupplung 11, deren Lamellen 12,13 in einem zwischen der Nabe 8a des Achswellenkegelrades 8 und der Zylinderwand 3a einer Bohrung im Differentialgetriebegehäuse 3 verbliebenen Ringraum untergebracht sind und jeweils abwechselnd in Nuten des Differentialgetriebegehäuses 3 bzw. der Nabe 8a geführt sind.

Zum Zusammenpressen des Lamellenpaketes zwecks Sperren des Differentialgetriebes dient eine ringförmige Druckplatte 14, auf die ihrerseits ein Kipphebelring 15 wirkt. Dieser Kipphebelring 15 besteht aus einer Vielzahl Kipphebel 15a, die radial angeordnet sind und sich mit ihrem inneren Endbereich, in welchem sie miteinander verbunden sind, auf der Nabe 8a radial abstützen. Im äußeren Endbereich weisen die Kipphebel 15a einen nach innen gerichteten Absatz 15b auf, um radial nach außen sowie axial in Richtung der Sperrkupplung 11 wirkende Kräfte aufzunehmen. Die Anordnung der Kipphebel 15a im Raum wurde so gewählt, daß diese mit der Achswelle 10 einen Winkel von etwa 45° einschließen. Auf diese Weise befindet sich der äußere Endbereich der Kipphebel 15a mit dem nach innen gerichteten Absatz 15b in großem axialen und radialen Abstand vom Auflagepunkt des Kipphebelringes 15 auf der Nabe 8a des Achswellenkegelrades 8. Etwa auf halber Länge besitzen die Kipphebel 15a eine Nase 15c, die an der Druckplatte 14 anliegt. Zur Aufnahme der beim Sperren des Differentialgetriebes auftretenden Axialkräfte stützt sich der Kipphebelring 15 über einen auf einem Absatz der Nabe 8a angeordneten Ring 16 an einer Tellerfeder 17 ab, die ihrerseits ebenfalls wieder über einen Ring 18 axial gesichert ist. Diese Abstützung stellt auch sicher, das es zu keinen Verklemmungen innerhalb der erfindungsgemäßen Betätigungseinrichtung kommt.

Die Betätigung der Differentialsperre erfolgt über ein Betätigungselement, das als die Achswelle 10 umgebende, in dem gleichzeitig die Seitenwand des Differentialgehäuses 3 bildenden Zahnrad 4 geführte Hülse 19 ausgebildet ist. Auf der dem Differentialgetriebe abgewandten Seite der Wand 1 steht die Hülse 19 in nicht gezeigter Weise mit einem Elektromagneten in Wirkverbindung, der diese im erregten Zustand aus der gezeigten Stellung in das Getriebegehäuse 3 hineinschiebt. Im Inneren des Getriebegehäuses 3 trägt die Hülse 19 einen Ring 20 mit einem äußeren, der Sperrkupplung 11 zugewandten Absatz 20a. In unbetätigtem Zustand befindet sich dieser Absatz 20a axialem Abstand von dem Absatz 15b des Kipphebelringes 15, auf der der Sperrkupplung 11 abgewandten Seite einer durch den Absatz 15b definierten Ebene. Zwischen diesen beiden Absätzen 15b, 20a ist ein beispielsweise als Tellerfeder ausgebildeter Spreizring 21 spielfrei angeordnet.

Die Funktionsweise der erfindungsgemäßen Betätigungseinrichtung ist wie folgt: In der gezeigten Stellung ist der Elektromagnet nicht erregt und infolgedessen das Differentialgetriebe nicht gesperrt. Dieses arbeitet somit in üblicher Weise, wobei sich die Lamellen 12,13 der Sperrkupplung 11 im Falle unterschiedlicher Achswellendrehzahlen relativ zueinander drehen.

Soll das Differentialgetriebe gesperrt werden, so wird der Elektromagnet erregt, wodurch die Hülse 19 in das Differentialgetriebegehäuse 3 eindringt, bis der Spreizring 21 in der durch den Absatz 15b des Kipphebelringes 15 definierten Ebene liegt. Bei diesem Vorgang stützt sich der Spreizring 21 mit seinem inneren Randbereich am Absatz 20a des Ringes 20 ab und erzwingt so eine Spreizung des Spreizringes 19, da dieser in seinem äußeren Randbereich in axialer Richtung am Absatz 15b des Kipphebelringes 15 abgestützt ist. Die Spreizung des Spreizringes 19 überträgt sich auf die einzelnen Kipphebel 15a des Kipphebelringes 15, welche dementsprechend in ihrer Ebene um die Aufstandslinie auf der Nabe 8a verschwenken und dabei die Druckplatte 14 im Sinne eines Zusammenpressens des Lamellenpakets der Sperrkupplung 11 nach links verschieben.

Wie aus Fig. 2 zu ersehen ist, steigt bei diesem Betätigungsvorgang die vom Elektromagneten aufzubringende, durch die Kurve A qualitativ angedeutete Betätigungskraft bis auf einen Maximalwert, der etwa bei halbem Betätigungsweg erreicht wird, um anschließend bis zum Erreichen des vollen Betätigungsweges der Hülse 19 auf einen sehr geringen Wert zu fallen. Demgegenüber steigt infolge der beschriebenen Anordnung der Einzelteile der Betätigungseinrichtung in Art eines Kniehebels die zum Zusammenpressen des Lamellenpaketes zur Verfügung stehende, durch die Kurve B ebenfalls qualitativ angedeutete Axialkraft bis zum Erreichen des vollen Betätigungsweges bis auf einen gegenüber der dann wirksamen Betätigungskraft wesentlich höheren Wert ständig an. In dieser Sperrstellung besteht für den Elektromagneten trotz der ständigen Aufrechterhaltung der Sperrung des Differentialgetriebes wegen der geringen Betätigungskraft keine Gefahr einer Überlastung auch bei Dauerbetrieb. Bei Entregung des Elektromagneten bewegt sich die Hülse 19 unter der geringen Restkraft des Spreizringes 21 wieder in seine Ausgangslage zurück.

## Patentansprüche

1. Betätigungseinrichtung für eine kraftschlüssige Sperrkupplung eines sperrbaren Differentialgetriebes für Kraftfahrzeuge, bei der im Kraftfluß von einem längsverschiebbaren Betätigungselement (19) zu einer Druckplatte (14) der im Innern des Differentialgetriebegehäuses (3) untergebrachten Sperrkupplung (11) ein erstes Kraftverstärkungselement (15) in Hebelbauweise angeordnet ist, dadurch gekennzeichnet,
daß dem ersten Kraftverstärkungselement (15) in Kraftflußrichtung ein zweites, nach dem Kniehebelprinzip arbeitendes Kraftverstärkungselement vorgeordnet ist, wobei das erste Kraftverstärkungselement (15) von mehreren im wesentlichen in radialen Ebenen liegenden Kipphebeln (15a) gebildet ist, die miteinander zu einem Kipphebelring (15) verbunden sind, der in seinem inneren Randbereich kupplungsabtriebsseitig abgestützt ist, in seinem mittleren Bereich zur Kraftübertragung an der Druckplatte (14) anliegt sowie mit seinem äußeren Randbereich in axialem Abstand von seinem inneren Randbereich und radialem Abstand von dem längsverschiebbaren Betätigungselement (Hülse (19), Ring (20)) mit dem zweiten Kraftverstärkungselement (Spreizring (21)) zusammenwirkt.

2. Betätigungseinrichtung nach Anspruch 1, dadurch gekennzeichnet, daß die Kipphebel (15a) in ihrem inneren Endbereich zu einem einstückigen Kipphebelring (15) verbunden sind.

3. Betätigungseinrichtung nach den Ansprüchen 1 oder 2, dadurch gekennzeichnet, daß der Kipphebelring (15) auf der Nabe (8a) der abtriebsseitigen Hälfte (Achswellenkegelrad (8)) der Sperrkupplung (11) geführt und abgestützt ist.

4. Betätigungseinrichtung nach den Ansprüchen 1 bis 3, dadurch gekennzeichnet, daß der Kipphebelring (15) auf der der Druckplatte (14) abgewandten Seite an einem federbelasteten Anschlag abgestützt ist.

5. Betätigungseinrichtung nach Anspruch 4, dadurch gekennzeichnet, daß als Anschlag ein gegen die Kraft einer Feder (17) verschiebbarer Ring (16) vorgesehen ist.

6. Betätigungseinrichtung nach den Ansprüchen 1 bis 5, dadurch gekennzeichnet, daß die Kipphebel (15a) als biegeelastische Träger ausgebildet sind.

7. Betätigungseinrichtung nach den Ansprüchen 1 bis 6, dadurch gekennzeichnet, daß als zweites Kraftverstärkungselement ein Spreizring (21) angeordnet ist.

8. Betätigungseinrichtung nach den Ansprüchen 1 bis 7, dadurch gekennzeichnet, daß sich der Spreizring (21) mit seinem inneren Randbereich sowohl radial als auch axial spielfrei an dem Betätigungselement (Hülse (19)) und mit seinem äußeren Randbereich sowohl radial als auch axial an entsprechenden Innenflächen (Absatz (15b)) der freien Endbereiche der Kipphebel (15a) abstützt.

9. Betätigungseinrichtung nach einem oder mehreren der Ansprüche 1 bis 8, gekennzeichnet durch die Anordnung im Inneren des Differentialgetriebegehäuses (3).

## Claims

1. Operating device for a power-locked locking clutch of a lockable differential gear for motor vehicles, with a first power-booster element (15) in the form of a lever assembly arranged in the power path from a longitudinally displaceable operating element (19) to a pressure plate (14) of the locking clutch (11), which is accommodated inside the differential-gear housing (3), characterised in that the first power-booster element (15) is preceded by a second power-booster element, which operates by the toggle-switch principle in which respect the first power-booster element (15) is composed of several tilt levers (15a), which are located substantially in radial planes and connected to one another to form a tilt-lever ring (15), which is supported in its inner edge area on the clutch-output side, abuts in its middle area for power-transfer purposes against a pressure plate (14) and co-acts with its outer edge area at axial distance from its inner edge area and at radial distance from its longitudinally displaceable operating element (sleeve (19), ring (20)) with the second power-booster element (spreader ring (21)).

2. Operating device according to claim 1, characterised in that the tilt levers (15a) are connected in their inner end region to a one-piece tilt-lever ring (15).

3. Operating device according to claims 1 or 2, characterised in that the tilt-lever ring (15) is guided and supported on the hub (8a) of the outputside half (axle-shaft-bevel wheel (8)) of the locking clutch (11).

4. Operating device according to claims 1 to 3, characterised in that the tilt-lever ring (15) is supported against a spring-tensioned stop at the side facing away from the pressure plate (14).

5. Operating device according to claim 4, characterised in that a stop is provided in the form of a ring (16), which is displaceable against the force of a spring (17).

6. Operating device according to claims 1 to 5, characterised in that the tilt levers (15a) are constructed as resilient carriers.

7. Operating device according to claims 1 to 6, characterised in that a spreader ring (21) is arranged as second power-booster element.

8. Operating device according to claims 1 to 7, characterised in that the spreading ring (21) supports itself with its inner edge area both radially and axially free of play against the operating element (sleeve (19)), and with its outer edge area both radially and axially against corresponding inner surfaces (step (15b)) of the free end areas of the tilt levers (15a).

9. Operating device according to one or more of the claims 1 to 8, characterised by the arrangement inside the differential-gear housing (3).

## Revendications

1. Dispositif d'actionnement d'un embrayage de blocage par une liaison par la force d'un différentiel susceptible d'être bloqué, sur un véhicule automobile, comportant dans le chemin de transmission des efforts, un élément d'actionnement (19) coulissant longitudinalement vers une plaque de pression (14) d'un embrayage de blocage (11) logé à l'intérieur du carter (3) du différentiel et appartenant à un premier élément d'amplification de force (15) réalisé sous la forme d'un levier, caractérisé en ce que le premier élément d'amplification de force (15) comporte en amont dans le sens de passage des efforts, un élément d'amplification de force fonctionnant selon le principe des leviers à genouillère, le premier élément d'amplification (15) étant formé par plusieurs leviers basculants (15a) situés principalement dans les plans radiaux, leviers qui sont reliés entre eux pour former un anneau basculant (15) puis s'appuyant du côté de l'embrayage, sur la zone marginale interne, s'appliquant dans la zone moyenne contre la plaque de pression (14) pour transmettre les efforts et par sa zone marginale extérieure, à une distance axiale de sa zone marginale intérieure et à une distance radiale de l'élément d'actionnement coulissant longitudinalement (douille 19, anneau 20), pour coopérer avec un second élément d'amplification de force (anneau d'écartement 21).

2. Dispositif d'actionnement selon la revendication 1, caractérisé en ce que par leur zone d'extrémité intérieure, les leviers basculants (15a) sont reliés pour former un anneau de levier basculant (15), en une seule pièce.

3. Dispositif d'actionnement selon les reventications 1 ou 2, caractérisé en ce que l'anneau de leviers basculants (15) est guidé et appuyé sur le moyeu (8a) de la moitié de l'embrayage bloquant (11) situé du côté de la sortie (pignon conique des essieux 8).

4. Dispositif d'actionnement selon les revendications 1 à 3, caractérisé en ce que l'anneau à leviers basculants (15) s'appuie contre une butée chargée par un ressort, par sa face opposée à celle de la plaque de pression (14).

5. Dispositif d'actionnement selon la revendication 4, caractérisé en ce que la butée est constituée par un anneau (16) coulissant contre la force d'un ressort (17).

6. Dispositif d'actionnement selon les revendications 1 à 5, caractérisé en ce que les leviers basculants (15a) sont des supports élastiques en flexion.

7. Dispositif d'actionnement selon les revendications 1 à 6, caractérisé en ce que le second élément d'amplification de force est un anneau d'écartement 21.

8. Dispositif d'actionnement selon les revendications 1 à 7, caractérisé en ce que l'anneau d'écartement (21) s'appuie par sa zone marginale intérieure tant radialement qu'axialement, sans jeu, contre l'élément d'actionnement (douille 19) et par sa zone marginale extérieure, tant radialement qu'axialement contre des surfaces internes correspondantes (épaulement 15b) des zones d'extrémité libre des leviers basculants (15a).

9. Dispositif d'actionnement selon l'une ou plusieurs des revendications 1 à 8, caractérisé par son montage à l'intérieur du carter du différentiel (3).

*Fig. 1*

*Fig. 2*

Kraft

B

A

Betätigungsweg d. Hülse 19